# EUROPÄISCHE PATENTSCHRIFT

(11) **EP 2 826 356 B1**
(45) Veröffentlichungstag und Bekanntmachung des Hinweises auf die Patenterteilung: **09.08.2017**
(21) Anmeldenummer: 14169556.9
(22) Anmeldetag: 23.05.2014
(51) Int. Cl.: A01D 41/127

(54) **Landwirtschaftliche Erntemaschine**
Agricultural harvester
Moissonneuse

(30) Priorität: 08.07.2013 DE 102013107169
(43) Veröffentlichungstag der Anmeldung: 21.01.2015
(73) Patentinhaber: CLAAS Selbstfahrende Erntemaschinen GmbH, 33428 Harsewinkel (DE)
(72) Erfinder: Eggenhaus, Georg, 48369 Saerbeck (DE); Escher, Matthias, 49134 Wallenhorst-Rulle (DE); Kettelhoit, Boris, 33335 Gütersloh (DE); Krause, Thilo, 39249 Glinde (DE); Behnke, Willi, 33803 Steinhagen (DE); Recknagel, Stefan, 33428 Harsewinkel (DE); Röwekamp, Thomas, 49134 Wallenhorst (DE); van de Sluis, Jan, 33334 Gütersloh (DE); Kildeby, Allan, 3060 Esperade (DK)

(56) Entgegenhaltungen:
- EP-A1- 1 763 988
- EP-A1- 2 220 925
- EP-A1- 2 401 906

## Beschreibung

Die vorliegende Erfindung betrifft eine landwirtschaftliche Erntemaschine gemäß dem Oberbegriff von Anspruch 1.

Landwirtschaftliche Erntemaschinen und insbesondere selbstfahrende Erntemaschinen, zu denen etwa Mähdrescher und Feldhäcksler zählen, nehmen Erntegut vom Feld auf und bearbeiten es mit einer Reihe von Arbeitsgeräten, um etwa einen möglichst großen Kornertrag in den Korntank der Erntemaschine abschöpfen zu können. Diese Arbeitsgeräte sind steuerbar, wobei insbesondere ihre Parameter - also Betriebsparameter der Arbeitsgeräte - eingestellt werden können und wobei je nach Einstellung dieser Parameter und den herrschenden Randbedingungen eine höhere oder niedrigere Qualität des geernteten Ernteguts die Folge ist. Zur Steuerung der Arbeitsgeräte und zur Einstellung ihrer Parameter weisen moderne Erntemaschinen regelmäßig Steuer- und Regeleinrichtungen auf, welche wiederum vom Fahrer von seiner Kabine aus bedient werden können. Bei Mähdreschern zählt zu diesen Arbeitsgeräten etwa das Dreschwerk, welches regelmäßig einen Dreschkorb und eine Mehrzahl von Dreschorganen sowie eine zum Dreschwerk in Bewegungsrichtung des Erntegutstroms nachgeordnete Reinigungseinrichtung mit einem Gebläse und mehreren Sieben beinhaltet.

Je nachdem, was für ein Erntegut, z. B. Raps, Weizen oder Gerste, geerntet werden soll und welche Randbedingungen auf dem Erntefeld und seiner Umgebung herrschen, zu welchen Randbedingungen etwa Feuchtigkeit, Bestandshöhe, Bodenbeschaffenheit usw. zählen, ist eine unterschiedliche Steuerung und Parametereinstellung der Arbeitsgeräte erforderlich, um eine möglichst hohe Qualität im Erntegut und gleichzeitig einen möglichst hohen Ertrag zu erreichen. Unerwünscht sind beispielsweise hohe Anteile von gebrochenen Körnern sowie von Verunreinigungen im Erntegut.

Aus dem Stand der Technik, so etwa aus der als nächstkommend angesehenen EP 1 763 988 A1, ist es bekannt, eine Kamera an einer Erntemaschine vorzusehen, welche Kamera Bildserien des Erntegutstroms im Ernteguttransportweg aufnimmt, die dann hinsichtlich der Qualität des abgebildeten Ernteguts, welche Qualität sich in erster Linie an dem Anteil an Bruchkörnern und Nichtkörnern bemisst, analysiert werden. Die Parametereinstellungen der Arbeitsgeräte, auf deren Grundlage die Bildserien erstellt wurden, können dann miteinander verglichen werden. Somit wird die Auswahl einer geeigneten Parametereinstellung erleichtert. Dabei kann die Einschätzung der Qualität des Erntegutstroms basierend auf den Bildserien sowie die darauf folgende Auswahl der Parametereinstellung entweder automatisch oder durch einen Bediener aufgrund eines eigenen Vergleiches erfolgen.

Nachteilig an dieser Lösung ist jedoch, dass das Erstellen einer Bildserie, die das Erntegut für eine gewisse Parametereinstellung der Arbeitsgeräte wiedergibt, erst nach einer längeren Einschwingphase der Erntemaschine und der Arbeitsgeräte vorgelegt wird. Die Bildserie wird erst aufgenommen, wenn sowohl die mechanische Verstellung der Arbeitsgeräte aufgrund einer neuen Parametereinstellung abgeschlossen ist als auch andere Einschwingprozesse, die eine Abweichung von dem quasi-stationären Zustand des Erntegutstroms bewirken können, ebenfalls abgeklungen sind. Das führt dazu, dass, erstens, regelmäßig erst nach einer Dauer von mehreren Minuten, welche auch variieren kann, eine auswertbare Darstellung dem Bediener oder der entsprechenden automatischen Funktion zur Verfügung gestellt wird und deswegen erst dann eine Einschätzung darüber vorgenommen werden kann, ob und welchen Effekt eine bestimmte Parametereinstellung auf die Erntegutqualität hat. Zweitens führt es auch dazu, dass lokale Unregelmäßigkeiten wie etwa eine Fläche im Feldbestand, die nur lokal, dafür aber besonders stark, verunreinigt ist, entweder in der Analyse gar nicht auffallen oder aber das Ergebnis so verfälschen, dass dieser eigentlich lokale Sachverhalt für das gesamte Feld angenommen oder zumindest teilweise projiziert wird. In beiden Fällen fällt es dann schwer, den tatsächlichen Sachverhalt herauszulesen.

Der vorliegenden Erfindung liegt das Problem zugrunde, die bekannte landwirtschaftliche Erntemaschine mit einer Kontrollanordnung derart auszugestalten und weiterzubilden, dass eine genauere und schnellere Einschätzung der Wirkung von Änderungen in den Parametereinstellungen der Arbeitsgeräte sowie eine bessere Identifikation lokaler Unregelmäßigkeiten im Feldbestand ermöglicht wird und darauf auch entsprechend schneller und genauer reagiert werden kann.

Das genannte Problem wird bei einer landwirtschaftlichen Erntemaschine mit den Merkmalen des Oberbegriffs von Anspruch 1 durch die Merkmale des kennzeichnenden Teils von Anspruch 1 gelöst.

Wesentlich ist die Erkenntnis, dass eine zyklische Aufnahme von Bildserien und die daraufhin in Echtzeit erfolgende Anzeige eines entsprechenden Bruchkornanteils und/oder Nichtkornanteils zu dieser Bildserie dem Bediener auch dann einen nützlichen Aufschluss über die Erntegutqualität sowie über die Qualität der Parametereinstellung der Arbeitsgeräte und der Feldbedingungen geben können, wenn noch kein eingeschwungener Zustand vorliegt. Auch wenn in den Übergangszuständen das als Bruchkornanteil und/oder Nichtkornanteil angezeigte Analyseergebnis nicht immer eine quantitativ genaue Einschätzung erlaubt, so kann doch jedenfalls eine qualitative schnelle Bewertung und dementsprechend eine schnellere Reaktion - ob nun automatisch oder durch den Bediener - darauf erfolgen.

Der Unteranspruch 3 sieht speziell vor, dass unterschiedliche Bruchkornanteile und/oder Nichtkornanteile jeweils für die Anzeige an den Bediener einerseits und für die Verwendung in einer Regelung der Parametereinstellung der Arbeitsgeräte andererseits verwendet werden.

Die Unteransprüche 4 bis 7 betreffen bevorzugte Möglichkeiten den auf der Bildserie beruhenden, aktuellen Bruchkornanteil und/oder Nichtkornanteil für den Bediener in prägnanter Weise anzuzeigen und ihn insbesondere dann zu warnen, wenn durch den aktuellen Bruchkornanteil und/oder den aktuellen Nichtkornanteil ein kritischer Bereich betreten bzw. ein Zulässigkeitsbereich verlassen wird.

Die bevorzugten Ausgestaltungen der Unteransprüche 8 und 9 beschreiben eine zu diesem Zweck besonders geeignete Ausbildung der Sensoreinrichtung sowie ihres Betriebs, um möglichst rasch nach Aufnahme einer Bildserie einen darauf basierenden Bruchkornanteil und/oder Nichtkornanteil anzeigen zu können.

Die Unteransprüche 10 bis 12 schließlich betreffen eine vorteilhafte Möglichkeit, die Sensoreinrichtung so mechanisch auszugestalten und an einer Erntegutführung des Erntegutstroms anzuordnen, dass der laufende Erntegutstrom zuverlässig und vollumfänglich erfasst werden kann, um somit möglichst genau Aufschluss über das aktuell tatsächlich verarbeitete Erntegut zu geben.

Weitere Einzelheiten, Merkmale, Ziele und Vorteile der vorliegenden Erfindung werden nachfolgend anhand der Zeichnung eines bevorzugten Ausführungsbeispiels näher erläutert. In der Zeichnung zeigt
- Fig. 1: eine schematische Seitenansicht eines Mähdreschers als vorschlagsgemäße landwirtschaftliche Erntemaschine,
- Fig. 2: eine schematische Seitenansicht eines Kornelevators des Mähdreschers der Fig. 1
- Fig. 3: eine erste beispielhafte Bildschirmwiedergabe einer Bedienereinrichtung des Mähdreschers der Fig. 1 mit der Wiedergabe eines Trichterdiagramms und
- Fig. 4: eine weitere beispielhafte Bildschirmwiedergabe der Bedienereinrichtung des Mähdreschers der Fig. 1 mit der Wiedergabe des Erntegutstroms und eines Säulendiagramms.

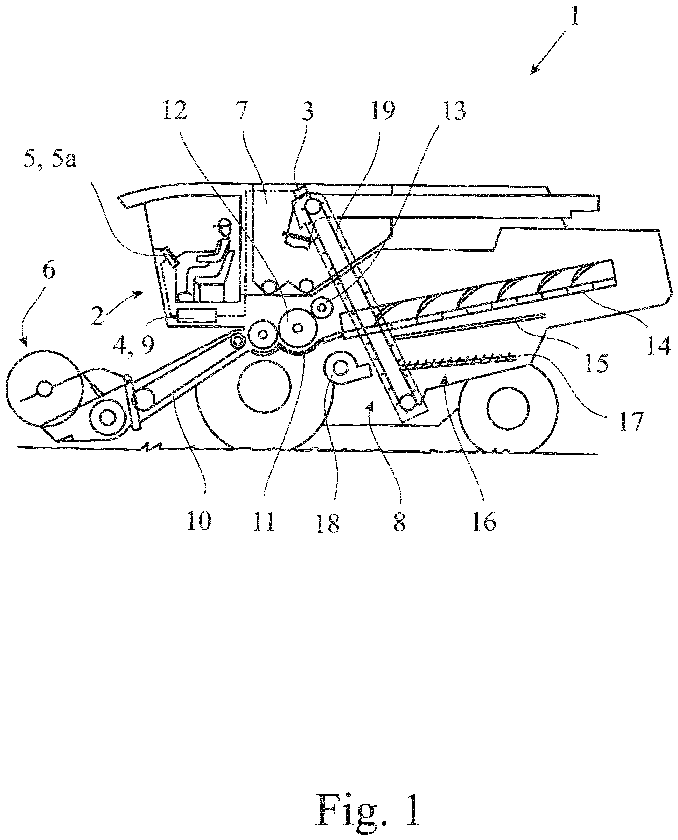

Die in der Fig. 1 dargestellte landwirtschaftliche Erntemaschine, bei der es sich hier beispielhaft um einen Mähdrescher 1 handelt, weist eine Kontrollanordnung 2 auf. Diese Kontrollanordnung 2 umfasst eine optische Sensoreinrichtung 3 zur Aufnahme von Bildserien eines durchlaufenden Haupterntegutstroms sowie eine Auswerteeinrichtung 4 zur Ermittlung eines Bruchkornanteils und/oder eines Nichtkornanteils des Haupterntegutstroms basierend auf einer aufgenommenen Bildserie und eine Visualisierungseinrichtung 5 zur Anzeige des Bruchkornanteils und/oder des Nichtkornanteils.

Hierbei können insbesondere die Auswerteeinrichtung 4 und die Visualisierungseinrichtung 5 sowohl separat als auch als einzelnes Gerät ausgeführt werden. Eine Bildserie in diesem Sinne besteht aus einer beliebigen Reihe von in kurzem Abstand hintereinander aufgenommenen Einzelbildern, wobei eine solche Bildserie auch nur aus einem einzelnen Bild bestehen kann. In besonders bevorzugter Ausgestaltung besteht jede Bildserie aus einer konstanten Anzahl von Bildern.

Wie unten stehend noch genauer erläutert wird, können auch ein oder mehrere Bilder aus der Bildserie zur weiteren Auswertung ausgewählt werden, wobei die restlichen Bilder auch verworfen werden können. Der zeitliche Abstand zwischen den einzelnen Bildern einer Bildserie kann als Zwischenbildzeit definiert werden, wobei dann die gesamte Aufnahmedauer der Bildserie als Bildserienaufnahmedauer bezeichnet werden könnte. Die Zwischenbildzeit kann sowohl konstant als auch, was bevorzugt ist, variabel und insbesondere durch die Auswerteeinrichtung 4 einstellbar sein. Es kann auch eine Videoaufnahme stattfinden, aus welcher dann ein oder mehrere einzelne Standbilder ausgewählt werden, welche damit eine Bildserie bilden. Die Zwischenbildzeit ergibt sich in so einem Fall aus dem Zeitversatz zwischen den einzelnen Bildern in analoger Weise. Die einzelnen Bilder der Bildserie können unterschiedliche Bildparameter, also insbesondere eine unterschiedliche Winkelperspektive, Beleuchtungszeit, Bildaufnahmedauer, Spektrum des Beleuchtungslichtes usw., aufweisen. Die einzelnen Bilder können auch von einer verteilten Sensoreinrichtung 3 aus mehreren Einzel-Sensorein-richtungen aufgenommen worden sein, wobei dann auch diese aus unterschiedlichen Perspektiven aufgenommenen Bilder zu einer einzelnen Bildserie zusammengefügt werden können.

Unter dem Begriff des "Erntegutstroms" der Erntemaschine ist vorliegend der Strom des verarbeiteten Ernteguts auf dem Ernteguttransportweg der Erntemaschine zu verstehen, welcher Ernteguttransportweg speziell bei dem Mähdrescher 1 bei dem Schneidwerk 6 beginnt und jedenfalls bis zum Korntank 7 des Mähdreschers 1 führt. Der Begriff des "Haupterntegutstroms" bezeichnet nun denjenigen Teil des Erntegutstroms, welcher den überwiegenden Teil des geernteten Guts, bezogen auf den gesamten Ernteguttransportweg, bildet. Anders ausgedrückt ist damit nicht ein (Teil-)Erntegutstrom gemeint, welcher etwa durch eine potenziell vorhandene, kleinere Nebenabzweigung des Ernteguttransportwegs in der Art eines Bypass bewegt wird.

Mit dem Begriff "Bruchkornanteil" bzw. "Nichtkornanteil" ist der Anteil der zerbrochenen Körner an allen Körnern im Erntegutstrom einerseits und der Anteil von Material im Erntegutstrom, welches kein Korn im Sinne des Ernteguts ist, andererseits gemeint. Es kann also in den Nichtkornanteil auch Material einfließen, welches zwar eigentlich auch Korn darstellt, aber kein Korn des aktuell geernteten Ernteguts ist. Dieser Bruchkorn- oder Nichtkornanteil kann sich auf die gerade von der entsprechenden Bildserie erfasste Bildfläche oder auf ein bestimmtes, soeben erfasstes Teilvolumen des Erntegutstroms beziehen. Bevorzugt ist aber, dass der Bruchkornanteil und/oder der Nichtkornanteil auf einen Durchsatz des Haupterntegutstroms bezogen ist, also auf die Gesamtheit des Haupterntegutstroms, wie er durch die Erntemaschine und speziell den Mähdrescher geführt ist.

Der ermittelte Bruchkornanteil und/oder Nichtkornanteil kann auf einem einzelnen Bild der Bildserie, auf der ganzen Bildserie oder auf einer speziellen Auswahl von einem oder mehreren Bildern der Bildserie basieren. Dabei können ein oder mehrere Bilder aus der Bildserie ausgewählt werden, welche gemäß einem Qualitätskriterium die beste Aufnahme darstellen.. Ein solches Qualitätskriterium kann eine besonders geeignete Helligkeits-, Kontur- oder Kontrastverteilung sein. Die Auswerteeinrichtung 4 nimmt prinzipiell eine Bildanalyse der Bildserie oder eines Teiles der Bildserie vor, bei welcher vorzugsweise zunächst Bruchkörner und Nichtkörner in dem Bild anhand geeigneter Algorithmen erkannt werden. Es wird dann die von den Bruchkörnern und Nichtkörnern eingenommene Fläche auf dem zweidimensionalen Bild als Flächenverhältnis berechnet und dieses Flächenverhältnis mithilfe einer geeigneten Extrapolationsfunktion auf einen Volumenanteil hochgerechnet.

Neben der Anzeige des Bruchkornanteils und/oder des Nichtkornanteils kann auch ein akustisches Signal erzeugt werden, so etwa durch die Ausgabe eines Warnsignals, wenn der Bruchkornanteil und/oder der Nichtkornanteil einen Grenzwert unter- oder überschreitet.

Die vorschlagsgemäße Erntemaschine ist nun dadurch gekennzeichnet, dass die Kontrollanordnung 2 zyklisch Bildserien aufnimmt und innerhalb einer vorbestimmten Verarbeitungszeit nach der Aufnahme einer Bildserie einen auf der Bildserie basierenden aktuellen Bruchkornanteil und/oder Nichtkornanteil anzeigt. Die Zyklizität bezieht sich also auf die Bildserie, wobei als maßgeblicher Zeitpunkt für die Bestimmung der Zyklizität etwa der Aufnahmezeitpunkt des ersten Bildes der Bildserie definiert werden kann. Es kann auch die oben definierte Bildserienaufnahmedauer gleich der Zykluszeit der Bildserie sein, was einer quasi-kontinuierlichen Aufnahme von Bildern ohne merkliche Pause zwischen einzelnen Bildserien entspricht. Es ist ferner zu bemerken, dass nicht jede tatsächlich aufgenommene Bildserie zu der Anzeige eines auf der Bildserie basierenden aktuellen Bruchkornanteils oder Nichtkornanteils innerhalb einer vorbestimmten Verarbeitungszeit führen muss. Es können etwa auch Bilder oder Bildserien aufgenommen werden, welche verworfen werden noch bevor sie der Auswerteeinrichtung 4 zugeführt werden. Erforderlich ist lediglich, dass es neben auf solche Weise verworfenen Bildserien auch weitere aufgenommene Bildserien gibt, welche zyklisch aufgenommen wurden und bei denen innerhalb der vorbestimmten Verarbeitungszeit nach ihrer jeweiligen Aufnahme ein auf der Bildserie basierender aktueller Bruchkornanteil und/oder aktueller Nichtkornanteil angezeigt wird.

Unter einer zyklischen Aufnahme der Bildserien ist vorliegend zu verstehen, dass die Aufnahme der Bildserien stetig wiederholt wird, aber nicht notwendigerweise mit einer gleichbleibenden Periode erfolgt. Die zyklische Aufnahme der Bildserien kann insbesondere durch eine entsprechende Ansteuerung der Sensoreinrichtung 3 durch die Auswerteeinrichtung 4 erfolgen.

Die Anzeige eines auf der Bildserie basierenden aktuellen Bruchkornanteils und/oder aktuellen Nichtkornanteils nach der Aufnahme der Bildserie innerhalb einer vorbestimmten Verarbeitungszeit kann auch als Echtzeitbedingung oder Echtzeitanforderung verstanden werden. Es ist also eine Verarbeitungszeit vorbestimmt, innerhalb der auf jeden Fall - vorbehaltlich der oben beschriebenen Möglichkeit des Verwerfens einzelner Bildserien - die Anzeige eines Bruchkornanteils und/oder Nichtkornanteils nach Aufnahme einer Bildserie erfolgt, wobei dieser Bruchkornanteil und/oder Nichtkornanteil auf der aufgenommenen Bildserie basiert. Mit anderen Worten ist als maximale Zeit zwischen diesen beiden Ereignissen - gleichsam die Laufzeit zwischen der Aufnahme einer Bildserie und der Anzeige eines darauf basierenden Bruchkornanteils und/oder Nichtkornanteils - eben die Verarbeitungszeit definiert, innerhalb welcher sich die Information in der aufgenommenen Bildserie in dem angezeigten aktuellen Bruchkornanteil und/oder aktuellen Nichtkornanteil widerspiegelt. Wenn nun, wie bevorzugt, für jede aufgenommene Bildserie ein auf der Bildserie basierender Bruchkornanteil und/oder Nichtkornanteil angezeigt wird, dann kann der angezeigte Bruchkornanteil und/oder Nichtkornanteil in gleicher Weise zyklisch aktualisiert werden, wie die Bildserie aufgenommen wird.

Hier ist zu beachten, dass innerhalb der vorbestimmten Verarbeitungszeit ein auf der aufgenommenen Bildserie basierender, aber nicht notwendig nur von diesem bestimmter aktueller Bruchkornanteil und/oder Nichtkornanteil angezeigt wird.

Es könnte etwa - wie unten stehend deutlicher ausgestaltet - eine Mittelung vorgenommen werden, bei welcher der aktuelle Bruchkornanteil und/oder der aktuelle Nichtkornanteil auf einem laufenden Fenster von Bildserien basiert. In so einem Fall ist also lediglich gefordert, dass innerhalb der vorbestimmten Verarbeitungszeit nach Aufnahme der Bildserie die entsprechende Bildserie bereits in diesem laufenden Fenster ist und auf diese Weise in die Ermittlung des Bruchkornanteils und/oder des Nichtkornanteils einfließt. Dass weitere vorher aufgenommene Bildserien ebenfalls durch eine solche Fensterung einfließen, schränkt diese Feststellung nicht ein.

Hier und nachfolgend ist mit dem Begriff des aktuellen Bruchkornanteils bzw. des aktuellen Nichtkornanteils der gerade angezeigte spezielle Wert für den Bruchkornanteil bzw. den Nichtkornanteil gemeint.

Bevorzugt ist die vorschlagsgemäße Erntemaschine weiter dadurch gekennzeichnet, dass die Erntemaschine steuerbare Arbeitsgeräte 8 aufweist und die Kontrollanordnung 2 eine Steuer- und Regeleinrichtung 9 zur Parametereinstellung der Arbeitsgeräte 8 basierend auf dem aktuellen Bruchkornanteil und/oder dem aktuellen Nichtkornanteil aufweist. Wie auch im Ausführungsbeispiel des Mähdreschers 1 in der Fig. 1 dargestellt, kann die Steuer- und Regelungseinrichtung 9 im selben Gerät wie die Auswerteeinrichtung 4 angeordnet sein.

Zu den steuerbaren Arbeitsgeräten 8 zählen bei dem hier dargestellten Mähdrescher 1 neben dem bereits erwähnten Schneidwerk 6 der mit diesem verbundene Schrägförderer 10. Von diesem aus wird der Erntegutstrom des Mähdreschers 1 an die von dem Dreschkorb 11 ummantelten Dreschorgane 12 übergeben. Über eine Umlenktrommel 13 gelangt der Erntegutstrom in die hier als Trennrotor ausgebildete Trenneinrichtung 14, in welchem freibewegliche Körner des Erntegutstroms in einen unteren Bereich abgeschieden werden. Von hier aus gelangt der Erntegutstrom über den Rücklaufboden 15 zu einer Reinigungsvorrichtung 16, die wie hier dargestellt aus mehreren Siebebenen 17 und einem Gebläse 18 besteht. Von hier aus führt der Kornelevator 19 den Erntegutstrom schließlich zum Korntank 7.

Die genannten Arbeitsgeräte 8 lassen sich steuern und sehen insbesondere eine Parametereinstellung vor. Dabei ist der Zusammenhang zwischen der Parametereinstellung der Arbeitsgeräte 8 und der Qualität des Ernteguts komplex und sowohl von der Art des Ernteguts als auch von einer Vielzahl von weiteren Randbedingungen abhängig. Beispielhaft sei darauf hingewiesen, dass etwa bei zu starkem Betrieb der Dreschorgane 12 ein übermäßiges Zerbrechen von Körnern im Erntegut auftritt und auch mehr Energie beim Dreschen verbraucht wird. Andererseits kann eine zu niedrige Dreschintensität der Dreschorgane 12 zu einem geringeren Verdruschvolumen und damit zu einem niedrigen Ertrag führen.

Ebenso ist bei der Reinigungsvorrichtung 16 die Parametereinstellung so vorzunehmen, dass einerseits möglichst alle Körner des Ernteguts im Erntetransportweg weitergeführt, dafür aber Verunreinigungen und andere unerwünschte Bestandteile ausgesondert werden. Selbst unter bekannten Randbedingungen stellt die optimale Parametereinstellung der Arbeitsgeräte 8 eine Herausforderung dar. Durch diese beschriebene und bevorzugte Ausführungsform kann eine automatische oder teilautomatische Ansteuerung und Parametereinstellung der Arbeitsgeräte 8 durch die Steuer- und Regeleinrichtung 9 der Kontrollanordnung 2 erfolgen.

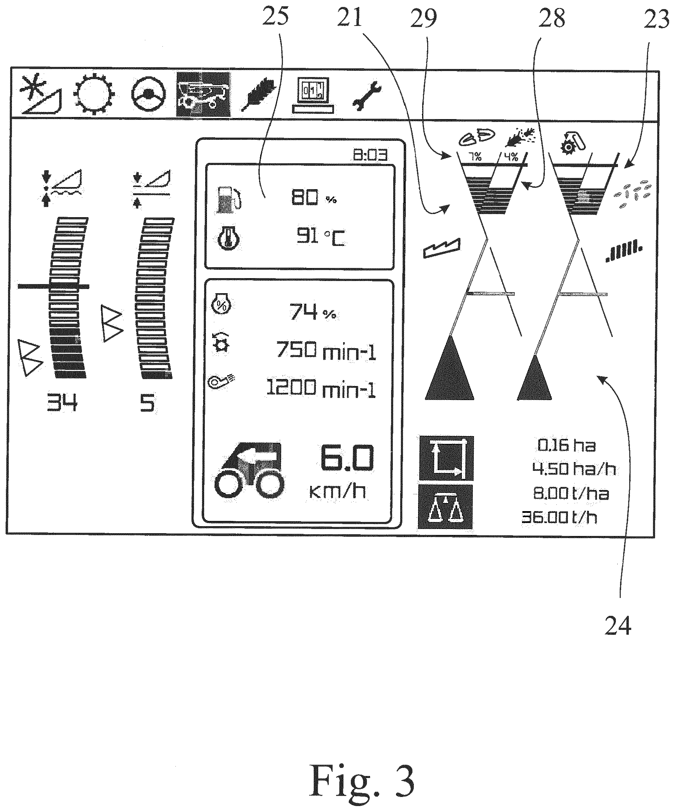

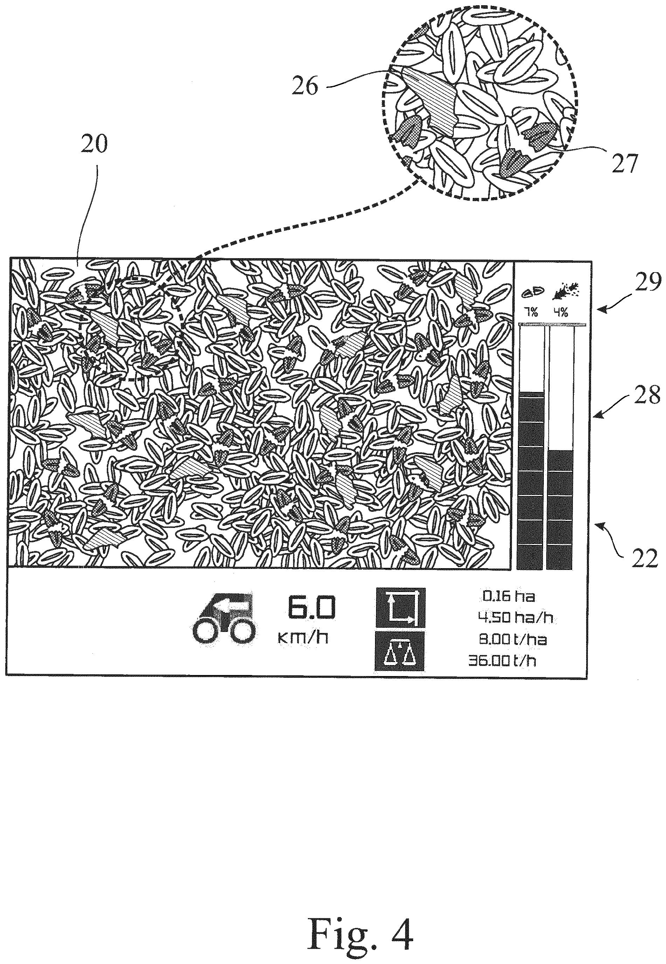

Weiter ist bevorzugt vorgesehen, dass die Auswerteeinrichtung 4 einen Roh-Bruchkornanteil und/oder Roh-Nichtkornanteil und einen gemittelten Bediener-Bruchkornanteil und/oder gemittelten Bediener-Nichtkornanteil ermittelt. Hierbei weist der Roh-Bruchkornanteil und/oder der Roh-Nichtkornanteil entweder keine zeitliche Mittelung oder jedenfalls eine geringere, insbesondere zeitliche Mittelung gegenüber dem gemittelten Bediener-Bruchkornanteil und/oder dem gemittelten Bediener-Nichtkornanteil auf. Es ist vorgesehen, dass die Visualisierungseinrichtung 5 den Bediener-Bruchkornanteil und/oder Bediener-Nichtkornanteil anzeigt. Beispiele hierfür, welche unten stehend noch genauer beschrieben werden, sind in den Fig. 3 und 4 wiedergegeben. Eine Verwirrung des Bedieners durch Sprünge in der Anzeige lässt sich also dadurch vermeiden, dass der für den Bediener angezeigte aktuelle Bediener-Bruchkornanteil und/oder aktuelle Bediener-Nichtkornanteil zumindest eine mäßige Form der Mittelung erfahren hat.

Hierauf aufbauend kann auch vorgesehen sein, dass die Steuer- und Regeleinrichtung 9 die Parametereinstellung der Arbeitsgeräte 8 basierend auf dem aktuellen Roh-Bruchkornanteil und/oder dem aktuellen Roh-Nichtkornanteil vornimmt. Damit kann die automatische Regelung prinzipiell rascher reagieren, als es die Anzeige an den Bediener durch die Visualisierungseinrichtung 5 tut. Ein Merkmal der Erfindung ist, dass der Bruchkornanteil und/oder der Nichtkornanteil auf einen Durchsatz des Haupterntegutstroms hochgerechnet wird, indem ein gemessener Flächen-Bruchkornanteil und/oder Flächen-Nichtkornanteil mindestens eines Bildes der Bildserie mittels eines jeweiligen Korrekturfaktors auf einen Volumen-Bruchkornanteil und/oder einen Volumen-Nichtkornanteil bezogen wird. Der Korrekturfaktor ist jeweils für die Ermittlung des Bruchkornanteils und des Nichtkornanteils unterschiedlich. Ein solcher Korrekturfaktor, welcher auch als Funktion des Flächen-Bruchkornanteils bzw. des Flächen-Nichtkornanteils vorliegen kann, berücksichtigt den Umstand, dass die prozentual eingenommene Fläche von Bruchkörnern oder Nichtkörnern in einem Bild nicht notwendigerweise dem prozentual eingenommenen Volumen an Bruchkörnern oder Nichtkörnern im Haupterntegutstrom entspricht. Hier kann der Korrekturfaktor für den Bruchkornanteil insbesondere sowohl von dem Flächen-Bruchkornanteil als auch von dem Flächen-Nichtkornanteil abhängig sein. Ebenso kann der Korrekturfaktor für den Nichtkornanteil sowohl von dem Flächen-Nichtkornanteil als auch von dem Flächen-Bruchkornanteil abhängig sein.

Der besagte Korrekturfaktor, welcher insbesondere erntegutabhängig ist, wurde vorzugsweise empirisch, also durch Messungen, ermittelt und in der Auswerteeinrichtung 4 hinterlegt. Um den Volumen-Bruchkornanteil bzw. den Volumen-Nichtkornanteil zu erhalten, wird der Flächen-Bruchkornanteil bzw. der Flächen-Nichtkornanteil mit dem jeweiligen Korrekturfaktor multipliziert. Das Hochrechnen auf den Durchsatz des Haupterntegutstroms bezieht sich auf das Volumen der Gesamtheit des Haupterntegutstroms, wie er durch die Erntemaschine und speziell den Mähdrescher 1 geführt ist. Hier und nachfolgend ist bevorzugt vorgesehen, dass es sich bei dem Begriff Bruchkornanteil bzw. dem Begriff Nichtkornanteil um den besagten Volumen-Bruchkornanteil bzw. den Volumen-Nichtkornanteil handelt, die jeweiligen Begriffe also bedeutungsgleich sind. Entsprechend ist ein Merkmal der Erfindung, dass der aktuelle Bruchkornanteil und/oder der aktuelle Nichtkornanteil, insbesondere der aktuelle Volumen-Bruchkornanteil und/oder der aktuelle Nichtkornanteil, als prozentualer Anteil angezeigt wird.

Eine bevorzugte Möglichkeit zur Anzeige des aktuellen Bruchkornanteils und/oder des aktuellen Nichtkornanteils sieht vor, dass die Visualisierungseinrichtung 5 ein Videobild 20, bei dem es sich insbesondere um ein Video-Standbild handelt, anzeigt, welches einem Bild der aufgenommenen Bildserie entspricht. Eine beispielhafte solche Anzeige eines Videobilds 20 auf einer Visualisierungseinrichtung 5, welche auch ein Berührbildschirm 5a sein kann, ist in der Fig. 4 wiedergegeben. Hier sind zusätzlich Nichtkornbestandteile 26 und Bruchkörner 27 visuell - beispielsweise durch farbliche Konturen oder Durchfärbungen - hervorgehoben. Beispielhaft sind Nichtkornbestandteile 26 grün und die Bruchkörner 27 rot gefärbt. Dies erleichtert eine zusätzliche Auswertung und Einschätzung des Bruchkornanteils und/oder des Nichtkornanteils durch den Bediener. Bei einer ausreichend hohen Anzeigefrequenz kann das Videobild 20 auch als Bewegtbild erscheinen.

Zur Anzeige ist weiter bevorzugt vorgesehen, dass die Visualisierungseinrichtung 5 ein Trichterdiagramm 21 und/oder ein Säulendiagramm 22 anzeigt, wobei das Trichterdiagramm 21 und/oder das Säulendiagramm 22 den aktuellen Bruchkornanteil und/oder den aktuellen Nichtkornanteil repräsentiert. Das Trichterdiagramm 21 und/oder das Säulendiagramm kann insbesondere jeweils eine prozentuale Darstellung, insbesondere bezogen auf die Gesamtheit des Haupterntegutstroms, umfassen.

Die Fig. 3 zeigt eine weitere beispielhafte Wiedergabe der besagten Visualisierungseinrichtung 5. Das abgebildete Trichterdiagramm 21 stellt sowohl den aktuellen Bruchkornanteil wie auch den aktuellen Nichtkornanteil dar. Daneben wird das Überkehrvolumen 23, der Reinigungsverlust 24 sowie das Hotkeyfenster 25 dargestellt.

Die Fig. 4 wiederum zeigt - neben dem besagten Videobild 20 - ein entsprechendes Säulendiagramm 22 sowohl für den aktuellen Bruchkornanteil als auch für den aktuellen Nichtkornanteil.

Bevorzugt ist weiter, dass, wie ebenfalls jeweils in der Fig. 3 und Fig. 4 dargestellt, das Trichterdiagramm 21 und/oder das Säulendiagramm 22 einen Zulässigkeitsbereich 28 anzeigt. Der Zulässigkeitsbereich 28 entspricht jeweils dem Bereich unter dem Balken. Auf diese Weise kann der Bediener auf einem Blick erkennen, ob sich der entsprechende Bruchkornanteil und/oder Nichtkornanteil in einem gewünschten oder außerhalb eines gewünschten Zulässigkeitsbereichs 28 befindet.

Hierauf aufbauend ist weiter bevorzugt vorgesehen, dass die Visualisierungseinrichtung 5 ein Warnsignal ausgibt, insbesondere sowohl visuell als auch akustisch ausgibt, wenn der aktuelle Bruchkornanteil und/oder der aktuelle Nichtkornanteil in einem Warnbereich 29 liegt. Dies kann aber auch dann geschehen, wenn der aktuelle Bruchkornanteil und/oder der aktuelle Nichtkornanteil außerhalb des Zulässigkeitsbereichs 28 liegt. Auf diese Weise kann der Bediener zusätzlich darauf hingewiesen werden, wenn der aktuelle Bruchkornanteil und/oder der aktuelle Nichtkornanteil den Zulässigkeitsbereich 28 verlässt oder den Warnbereich 29 betrifft.

Es wurde bereits festgestellt, dass der Bruchkornanteil und/oder Nichtkornanteil auf der aufgenommenen Bildserie basiert, welche wiederum durch die Sensoreinrichtung 3 aufgenommen wurde. Der nachfolgend beschriebenen Sensoreinrichtung 3 und ihrer Anordnung in der Erntemaschine kommt dabei Bedeutung als eigenständige Erfindung zu.

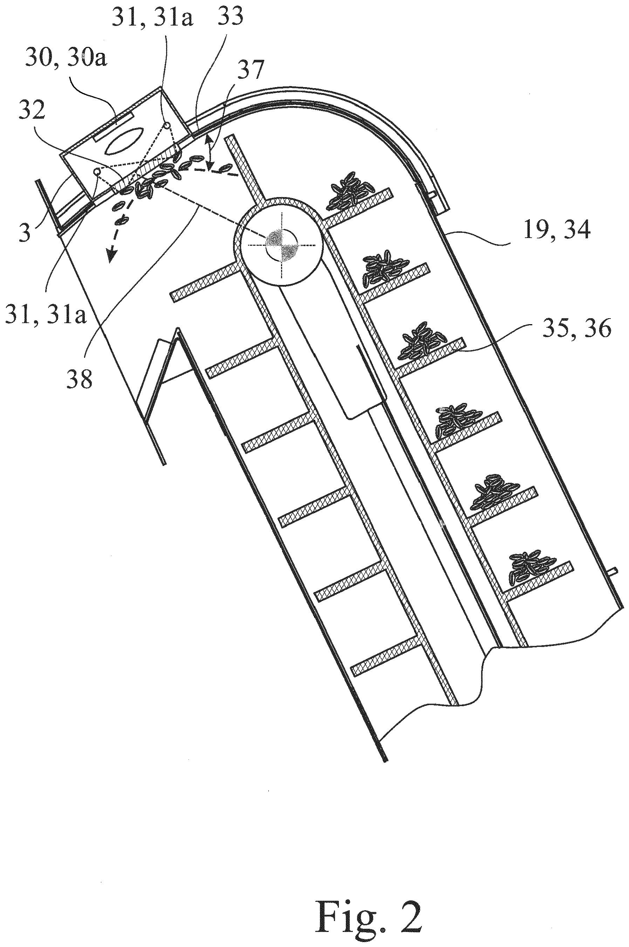

Diesbezüglich sieht eine bevorzugte Ausgestaltung vor, dass die Sensoreinrichtung 3 - wie in der Fig. 2 dargestellt - einen Lichtdetektor 30, bei dem es sich vorzugsweise um einen CMOS (Komplementärer Metall-Oxid-Halbleiter) - Lichtsensor 30a handelt und eine Beleuchtungsvorrichtung 31, vorzugsweise gebildet durch eine Leuchtdiodenanordnung 31 a, umfasst.

Zur Einhaltung der vorschlagsgemäßen Verarbeitungszeit hat es sich als vorteilhaft erwiesen, dass der Lichtdetektor 30 ein globales Shutter zur Einstellung einer Lichtaufnahmedauer aufweist. Unter einem globalen Shutter ist die elektronische Möglichkeit zu verstehen, alle Einzelpixel des Lichtdetektors 30 im Wesentlichen gleichzeitig lichtempfindlich zu schalten bzw. lichtunempfindlich zu schalten. Diese Fähigkeit steht im Gegensatz zu einem sogenannten Rolling-Shutter, bei dem eine solche Umschaltung eben nicht gleichzeitig für alle Einzelpixel, sondern nur sukzessive reihenweise erfolgt.

Ebenso hat es sich als vorteilhaft erwiesen, dass die Bilder jeweils einer einzelnen Bildserie mit einer identischen Lichtaufnahmedauer aufgenommen werden. Mit anderen Worten ist die Öffnungszeit des Shutter - entsprechend der Zeit der Lichtempfindlichkeit des Lichtdetektors 30 - für alle Bilder einer jeweiligen Bildserie gleich. Dies hat den Vorteil, dass eine zeitaufwendige Umstellung der Lichtaufnahmedauer des Lichtdetektors 30 nicht vorgenommen werden muss, mithin also die Bildaufnahmetaktung erhöht werden kann. Vorzugsweise kann die Lichtaufnahmedauer auch für die aufgenommenen Bildserien gleich sein.

Hinsichtlich der genannten Beleuchtungsvorrichtung 31 ist bevorzugt vorgesehen, dass die Beleuchtungsvorrichtung 31 für jedes Bild einer Bildserie jeweils einen Leuchtimpuls erzeugt. Bevorzugt ist dabei, dass die Leuchtimpulse einer Bildserie eine jeweils unterschiedliche Leuchtimpulsdauer aufweisen. Mit anderen Worten unterscheidet sich jedes Bild einer Bildserie durch eine verschiedene Dauer des entsprechenden Leuchtimpulses. Da verschiedene Merkmale des Erntegutstroms je nach zu ermittelndem Bruchkornanteil oder Nichtkornanteil interessant sind, wobei dies von Erntegut zu Erntegut unterschiedlich sein kann, und diese Merkmale je nach Leuchtimpulsdauer unterschiedlich deutlich hervortreten, kann über diese Variabilität der Leuchtimpulsdauer gewährleistet werden, dass unterschiedliche Merkmale ermittelt werden können.

Aber neben der internen Ausgestaltung der Sensoreinrichtung 3 gibt es auch bevorzugte Anordnungen und Ausgestaltungen der Sensoreinrichtung 3 innerhalb der Erntemaschine. Speziell ist bevorzugt, dass, wie aus der Fig. 2 erkennbar, die Sensoreinrichtung 3 ein transparentes Gehäusestück 32 aufweist, welches Teil einer insbesondere örtlich ebenen Wandfläche 33 einer vorzugsweise rohrartigen Erntegutführung 34 ist. Bei der Erntegutführung 34 kann es sich insbesondere um den Kornelevator 19 handeln. Mit anderen Worten ist das transparente Gehäusestück 32, welches zum Durchlass sowohl der Leuchtimpulse als auch ihrer jeweiligen Reflexion dient, ein Teil der Wandung der Erntegutführung 34 und steht gegenüber dieser Wandung weder vor noch ist sie zurückgesetzt. Eine solche Anordnung hat den Vorteil, dass die Sensoreinrichtung 3 nicht nur besonders nah an den Erntegutstrom angeordnet werden kann und ihr Vorhandensein die Führung des Erntegutstroms auf dem Ernteguttransportweg möglichst wenig beeinflusst, sondern sie bewirkt auch, dass die Bestandteile des Erntegutstroms selber durch ihr Auftreffen auf das transparente Gehäusestück 32 von alleine seine Reinigung bewirken. Ein Verstauben wird damit wirksam verhindert.

Es ist bevorzugt, dass die Erntegutführung 34 eine Erntegutantriebsanordnung 35, vorzugsweise Erntegutpaddel 36, aufweist, welche den Haupterntegutstrom so bewegen, dass dieser zumindest teilweise auf das transparente Gehäusestück 32 gelenkt wird. Wenn auf diese Weise gewährleistet wird, dass im Wesentlichen stets Erntegut des Haupterntegutstroms in unmittelbarer Nähe des transparenten Gehäusestücks 32 oder dieses berührend vorhanden ist, dann kann die Sensoreinrichtung 3 stets auf eine fixe Entfernung, vorzugsweise auf einen Punkt im Wesentlichen unmittelbar jenseits des transparenten Gehäusestücks 32, fokussiert sein und es bleibt dennoch gewährleistet, dass an dieser fokussierten Entfernung der Haupterntegutstrom erfasst werden kann.

Eine erste bevorzugte Variante sieht hierbei vor, dass der Haupterntegutstrom, zumindest teilweise, in einem spitzen Winkel 37, welcher also weniger als 45° und insbesondere weniger als 22,5° beträgt, auf das transparente Gehäusestück 32 gelenkt wird. Ein beispielhafter spitzer Winkel 37 ist in der Fig. 2 dargestellt. Auf diese Weise wird gewährleistet, dass einerseits ein möglicher Aufprall des Haupterntegutstroms auf dem Gehäusestück 32 diesen nicht wesentlich von seinem normalen Verlauf ablenkt und andererseits eine definierte Relativbewegung zwischen Haupterntegutstrom und Gehäusestück 32 stattfindet.

Gemäß einer zweiten bevorzugten Variante wird der Haupterntegutstrom, zumindest teilweise, in einem stumpfen Winkel, welcher vorzugsweise größer als 67,5° ist, auf das transparente Gehäusestück 32 gelenkt. Hiermit wird einerseits wirksam sichergestellt, dass der Haupterntegutstrom das transparente Gehäusestück 32 zumindest teilweise berührt und dies auch auf eine Art und Weise geschieht, welches für eine besonders gute Reinigung des transparenten Gehäusestücks sorgt.

Um ein möglichst unverfälschtes Ergebnis der Ermittlung des Bruchkornanteils und/oder des Nichtkornanteils zu gewährleisten, welche Verfälschung etwa dann auftreten könnte, wenn nur ein Teil des Erntegutstroms zur Aufnahme durch die Sensoreinrichtung 3 durch eine Abzweigung vorgesehen wäre, ist bevorzugt vorgesehen, dass die von dem transparenten Gehäusestück 32 gebildete Wandfläche 33 einen Abschnitt eines Erntegutführungsquerschnitts 38 bildet, welcher im Wesentlichen von dem vollständigen Erntegutstrom der Erntemaschine durchquert wird. Anders ausgedrückt muss im Wesentlichen der gesamte Erntegutstrom der Erntemaschine den Erntegutführungsquerschnitt 38 durchqueren, welcher grundsätzlich von der Sensoreinrichtung 3 erfassbar und damit in der Bildserie aufnehmbar ist.

Idealerweise führt das Vorsehen der Sensoreinrichtung 3 sowie der Auswerteeinrichtung 4 und ihrer Funktionalität zu keiner Verlangsamung in der Führung des Erntegutstroms auf dem Ernteguttransportweg. Deshalb ist es bevorzugt, dass der durchlaufende Haupterntegutstrom im Wesentlichen stets bewegt an dem transparenten Gehäusestück 32 vorbeigeführt wird. Damit wird auch die bereits erwähnte Reinigungswirkung zusätzlich befördert.

Zurückkommend auf die eingangs erwähnte Echtzeitreaktion der vorschlagsgemäßen Kontrollanordnung 2 ist hier speziell bevorzugt, dass die vorbestimmte Verarbeitungszeit im Wesentlichen eine Sekunde, vorzugsweise weniger als eine Sekunde beträgt. Mit anderen Worten zeigt die Kontrollanordnung 2 nach Aufnahme einer Bildserie nicht später als eine Sekunde einen Bruchkornanteil und/oder Nichtkornanteil an, welcher auf dieser Bildserie basiert. Dabei kann diese Zeit individuell auch kleiner als eine Sekunde sein.

Diese vorbestimmte Verarbeitungszeit muss aber auch nicht immer gleichbleibend sein, wie die folgend beschriebene und bevorzugte Variante verdeutlicht. Sie ist dadurch gekennzeichnet, dass die Erntemaschine zur wahlweisen Ernte mehrerer Fruchtarten eingerichtet ist und die Kontrollanordnung 2 die vorbestimmte Verarbeitungszeit aus einem Satz vorbestimmter Verarbeitungszeiten basierend auf der gewählten Fruchtart bestimmt. Diese Variabilität je nach Fruchtart muss aber nicht auf die vorbestimmte Verarbeitungszeit beschränkt sein, sondern kann auch die Zeitspanne beeinflussen, innerhalb der die Bildserie aufgenommen wird. Da ist es bevorzugt, dass die Bildserie innerhalb einer auf der gewählten Fruchtart basierenden Bildaufnahmedauer aufgenommen wird.

Grundsätzlich steht die Zykluszeit, mit der die Sensoreinrichtung 3 zyklisch die Bildserien aufnimmt, in keinem zwingenden Zusammenhang mit der vorbestimmten Verarbeitungszeit. Jedoch kann, wie bereits festgestellt, der angezeigte aktuelle Bruchkornanteil und/oder der aktuelle Nichtkornanteil grundsätzlich umso schneller "aufgefrischt" werden, je häufiger Bildserien aufgenommen werden. Daher ist es bevorzugt, dass die Kontrollanordnung 2 den angezeigten aktuellen Bruchkornanteil und/oder aktuellen Nichtkornanteil zyklisch auffrischt, und zwar mit einer Anzeige-Zykluszeit - entsprechend einer Zykluszeit des Anzeigevorgangs - welche im Wesentlichen gleich der Zykluszeit ist, mit der die Sensoreinrichtung 3 zyklisch die Bildserien aufnimmt. Bevorzugt ist, dass die Sensoreinrichtung 3 mit einer maximalen Zykluszeit Bildserien aufnimmt, wobei diese maximale Zykluszeit kleiner als die vorbestimmte Verarbeitungszeit ist.

Hierbei kann die Bildserienaufnahme durch die Sensoreinrichtung 3 auch periodisch erfolgen, sodass dann vorzugsweise die Sensoreinrichtung 3 mit einer Periodenzeit Bildserien aufnimmt und wiederum diese Periodenzeit bevorzugt kleiner als die vorbestimmte Verarbeitungszeit ist. Gemäß der soeben beschriebenen bevorzugten Ausführungsform ergibt sich dann daraus, dass die Kontrollanordnung 2 den angezeigten aktuellen Bruchkornanteil und/oder aktuellen Nichtkornanteil periodisch auffrischt, und zwar mit einer periodischen - und also gleichbleibenden - Ausgabe-Zykluszeit, welche im Wesentlichen gleich der Zykluszeit ist, mit der die Sensoreinrichtung 3 zyklisch die Bildserien aufnimmt.

## Patentansprüche

1. Landwirtschaftliche Erntemaschine mit einer Kontrollanordnung (2), welche Kontrollanordnung (2) eine optische Sensoreinrichtung (3) zur Aufnahme von Bildserien eines durchlaufenden Erntegutstroms, eine Auswerteeinrichtung (4) zur Ermittlung eines Bruchkornanteils und/oder eines Nichtkornanteils des Erntegutstroms basierend auf einer Bildanalyse der aufgenommenen Bildserie und eine Visualisierungseinrichtung (5) zur Anzeige des Bruchkornanteils und/oder des Nichtkornanteils umfasst,
**dadurch gekennzeichnet,**
**dass** der durchlaufende Erntegutstrom ein durchlaufender Haupterntegutstrom ist und dass die Kontrollanordnung (2) zyklisch Bildserien des durchlaufenden Haupterntegutstrom aufnimmt und innerhalb einer vorbestimmten Verarbeitungszeit nach der Aufnahme einer Bildserie einen auf der Bildserie basierenden aktuellen Bruchkornanteil und/oder Nichtkornanteil anzeigt, wobei der Bruchkornanteil und/oder der Nichtkornanteil auf einen Durchsatz des Haupterntegutstroms hochgerechnet wird, indem ein gemessener Flächen-Bruchkornanteil und/oder Flächen-Nichtkornanteil mindestens eines Bildes der Bildserie mittels eines jeweiligen Korrekturfaktors auf einen Volumen-Bruchkornanteil und/oder einen Volumen-Nichtkornanteil bezogen wird und der aktuelle Bruchkornanteil und/oder der aktuelle Nichtkornanteil als prozentualer Anteil angezeigt wird.

2. Landwirtschaftliche Erntemaschine nach Anspruch 1, **dadurch gekennzeichnet, dass** die Erntemaschine steuerbare Arbeitsgeräte (8) aufweist und die Kontrollanordnung (2) eine Steuer- und Regeleinrichtung (9) zur Parametereinstellung der Arbeitsgeräte (8) basierend auf dem aktuellen Bruchkornanteil und/oder dem aktuellen Nichtkornanteil aufweist.

3. Landwirtschaftliche Erntemaschine nach Anspruch 1 oder 2, **dadurch gekennzeichnet, dass** die Auswerteeinrichtung (4) einen Roh-Bruchkornanteil und/oder Roh-Nichtkornanteil und einen gemittelten Bediener-Bruchkornanteil und/oder gemittelten Bediener-Nichtkornanteil ermittelt, wobei die Visualisierungseinrichtung (5) den Bediener-Bruchkornanteil und/oder Bediener-Nichtkornanteil anzeigt, vorzugsweise, dass die Steuer- und Regeleinrichtung (9) die Parametereinstellung der Arbeitsgeräte (8) basierend auf dem aktuellen Roh-Bruchkornanteil und/oder dem aktuellen Roh-Nichtkornanteil vornimmt.

4. Landwirtschaftliche Erntemaschine nach einem der Ansprüche 1 bis 3,**dadurch gekennzeichnet, dass** der Bruchkornanteil und/oder der Nichtkornanteil auf einen Durchsatz des Haupterntegutstrom hochgerechnet wird, indem ein gemessener Flächen-Bruchkornanteil und/oder Flächen-Nichtkornanteil mindestens eines Bildes der Bildserie mittels eines erntegutabhängigen jeweiligen Korrekturfaktors auf einen Volumen-Bruchkornanteil und/oder einen Volumen-Nichtkornanteil bezogen wird, und dass aktuelle Volumen-Bruchkornanteil und/oder der aktuelle Volumen-Nichtkornanteil als prozentualer Anteil angezeigt wird.

5. Landwirtschaftliche Erntemaschine nach einem der Ansprüche 1 bis 4, **dadurch gekennzeichnet, dass** die Visualisierungseinrichtung (5) ein Videobild (20), vorzugsweise ein Video-Standbild, anzeigt, welches einem Bild der aufgenommenen Bildserie entspricht.

6. Landwirtschaftliche Erntemaschine nach einem der Ansprüche 1 bis 5, **dadurch gekennzeichnet, dass** die Visualisierungseinrichtung (5) ein Trichterdiagramm (21) und/oder ein Säulendiagramm (22) anzeigt, wobei das Trichterdiagramm (21) und/oder das Säulendiagramm (22) den aktuellen Bruchkornanteil und/oder den aktuellen Nichtkornanteil repräsentiert, vorzugsweise, wobei das Trichterdiagramm (21) und/oder das Säulendiagramm (22) einen Zulässigkeitsbereich (28) anzeigt.

7. Landwirtschaftliche Erntemaschine nach Anspruch 6, **dadurch gekennzeichnet, dass** die Visualisierungseinrichtung (5) ein Warnsignal ausgibt, wenn der aktuelle Bruchkornanteil und/oder der aktuelle Nichtkornanteil in einem Warnbereich (29) liegt, vorzugsweise, auch wenn der aktuelle Bruchkornanteil und/oder der aktuelle Nichtkornanteil außerhalb des Zulässigkeitsbereichs (28) liegt.

8. Landwirtschaftliche Erntemaschine nach einem der Ansprüche 1 bis 7, **dadurch gekennzeichnet, dass** die Sensoreinrichtung (3) einen Lichtdetektor (30), vorzugsweise einen CMOS-Lichtsensor (30a), und eine Beleuchtungsvorrichtung (31), vorzugsweise eine Leuchtdiodenanordnung (31a), umfasst, insbesondere, dass der CMOS-Lichtsensor (30a) ein globales Shutter zur Einstellung einer Lichtaufnahmedauer aufweist, weiter insbesondere, dass die Bilder jeweils einer einzelnen Bildserie mit einer identischen Lichtaufnahmedauer aufgenommen werden.

9. Landwirtschaftliche Erntemaschine nach Anspruch 8, **dadurch gekennzeichnet, dass** die Beleuchtungsvorrichtung (31) für jedes Bild einer Bildserie jeweils einen Leuchtimpuls erzeugt, vorzugsweise, dass die Leuchtimpulse einer Bildserie eine jeweils unterschiedliche Leuchtimpulsdauer aufweisen.

10. Landwirtschaftliche Erntemaschine nach einem der Ansprüche 1 bis 9, **dadurch gekennzeichnet, dass** die Sensoreinrichtung (3) ein transparentes Gehäusestück (32) aufweist, welches Teil einer, insbesondere örtlich ebenen, Wandfläche (33) einer, vorzugsweise rohrartigen, Erntegutführung (34) ist, insbesondere eines Kornelevators (19), weiter insbesondere, dass das transparente Gehäusestück (32) einen Abschnitt eines Erntegutführungsquerschnitts (38) bildet, welcher im Wesentlichen von dem vollständigen Erntegutstrom der Erntemaschine durchquert wird.

11. Landwirtschaftliche Erntemaschine nach Anspruch 10, **dadurch gekennzeichnet, dass** die Erntegutführung (34) eine Erntegutantriebsanordnung (35), vorzugsweise Erntegutpaddel (36), aufweist, welche den Haupterntegutstrom so bewegen, dass dieser zumindest teilweise, insbesondere in einem spitzen Winkel (37) oder in einen stumpfen Winkel, auf das transparente Gehäusestück (32) gelenkt wird.

12. Landwirtschaftliche Erntemaschine nach einem der Ansprüche 10 bis 11, **dadurch gekennzeichnet, dass** der durchlaufende Haupterntegutstrom im Wesentlichen stets bewegt an dem transparenten Gehäusestück (32) vorbeigeführt wird.

13. Landwirtschaftliche Erntemaschine nach einem der Ansprüche 1 bis 12, **dadurch gekennzeichnet, dass** die vorbestimmte Verarbeitungszeit im Wesentlichen eine Sekunde, vorzugsweise weniger als eine Sekunde, beträgt.

14. Landwirtschaftliche Erntemaschine nach einem der Ansprüche 1 bis 13, **dadurch gekennzeichnet, dass** die Erntemaschine zur wahlweisen Ernte mehrerer Fruchtarten eingerichtet ist und die Kontrollanordnung die vorbestimmte Verarbeitungszeit aus einem Satz vorbestimmter Verarbeitungszeiten basierend auf der gewählten Fruchtart bestimmt, vorzugsweise, dass eine Bildserie innerhalb einer auf der gewählten Fruchtart basierenden Bildaufnahmedauer aufgenommen wird.

15. Landwirtschaftliche Erntemaschine nach einem der Ansprüche 1 bis 14, **dadurch gekennzeichnet, dass** die Sensoreinrichtung (3) mit einer maximalen Zykluszeit, vorzugsweise mit einer Periodenzeit, Bildserien aufnimmt, wobei die maximale Zykluszeit bzw. die Periodenzeit kleiner als die vorbestimmte Verarbeitungszeit ist.

## Claims

1. An agricultural harvester comprising a control arrangement (2), which control arrangement (2) includes an optical sensor device (3) for recording image series of a passing-through crop material flow, an evaluation device (4) for ascertaining a broken grain component and/or a non-grain component of the crop material flow based on an image analysis of the recorded image series and a display device (5) for displaying the broken grain component and/or the non-grain component,
**characterised in that**
the passing-through crop material flow is a passing-through main crop material flow and that the control arrangement (2) cyclically records image series of the passing-through main crop material flow and within a predetermined processing time after recordal of an image series displays a current broken grain component and/or a non-grain component based on the image series, wherein the broken grain component and/or the non-grain component Is extrapolated to a throughput of the main crop material flow **In that** a measured surface area broken grain component and/or the surface area non-grain component of at least one image of the Image series is related by means of a respective correction factor to a volume broken grain component and/or a volume non-grain component and the current broken grain component and/or the current non-grain component Is displayed as a percentage component.

2. An agricultural harvester according to claim 1 **characterised in that** the harvester has controllable working implements (8) and the control arrangement (2) has an open-loop and closed-loop control device (9) for parameter adjustment of the working implements (8) based on the current broken grain component and/or the current non-grain component.

3. An agricultural harvester according to claim 1 or claim 2 **characterised in that** the evaluation device (4) ascertains a raw broken grain component and/or a raw non-grain component and an averaged operator broken grain component and/or an averaged operator non-grain component, wherein the display device (5) displays the operator broken grain component and/or operator non-grain component, and preferably that the open-loop and closed-loop control device (9) implements parameter adjustment of the working implements (8) based on the current raw broken grain component and/or the current raw non-grain component.

4. An agricultural harvester according to one of claims 1 to 3 **characterised in that** the broken grain component and/or the non-grain component Is extrapolated to a throughput of the main crop material flow in that a measured surface area broken grain component and/or surface area non-grain component of at least one Image of the image series is related by means of a crop material-dependent respective correction factor to a volume broken grain component and/or a volume non-grain component and that the current volume broken grain component and/or the current volume non-grain component is displayed as a percentage component.

5. An agricultural harvester according to one of claims 1 to 4 **characterised in that** the display device (5) displays a video Image (20), preferably a still video Image, which corresponds to an Image of the recorded image series.

6. An agricultural harvester according to one of claims 1 to 5 **characterised in that** the display device (5) displays a funnel diagram (21) and/or a bar chart (22), wherein the funnel diagram (21) and/or the bar chart (22) represents the current broken grain component and/or the current non-grain component, preferably wherein the funnel diagram (21) and/or the bar chart (22) displays an admissibility range (28).

7. An agricultural harvester according to claim 6 **characterised in that** the display device (5) delivers a warning signal if the current broken grain component and/or the current non-grain component is in a warning range (29), preferably even If the current broken grain component and/or the current non-grain component lies outsize the admissibility range (28).

8. An agricultural harvester according to one of claims 1 to 7 **characterised in that** the sensor device (3) includes a light detector (30), preferably a CMOS light sensor (30a), and a lighting device (31), preferably a light-emitting diode arrangement (31a), in particular that the CMOS light sensor (30a) has a global shutter for adjusting a light recording period, further in particular that the Images of a respective individual image series are recorded with an identical light recording period.

9. An agricultural harvester according to claim 8 **characterised in that** the lighting device (30) produces a respective light pulse for each image of an image series, and preferably that the light pulses of an image series are of a respectively different light pulse duration.

10. An agricultural harvester according to one of claims 1 to 9 **characterised in that** the sensor device (3) has a transparent housing portion (32) which is part of an In particular locally flat wall surface (33) of a preferably tubular crop material guide (34), In particular a grain elevator (19), and further in particular that the transparent housing portion (32) forms a portion of a crop material guide cross-section (38), through which substantially the entire crop material flow of the harvester passes.

11. An agricultural harvester according to claim 10 **characterised In that** the crop material guide (34) has a crop material drive arrangement (35), preferably crop material paddles (36), which moves the main crop material flow In such a way that It is deflected at least partially, in particular at an acute angle (37) or at an obtuse angle, on to the transparent housing portion (32).

12. An agricultural harvester according to one of claims 10 and 11 **characterised in that** the passing-through main crop material flow is guided past the transparent housing portion (32) In substantially constantly moved relationship.

13. An agricultural harvester according to one of claims 1 to 12 **characterised In that** the predetermined processing time is substantially a second, preferably less than a second.

14. An agricultural harvester according to one of claims 1 to 13 **characterised In that** the harvester Is adapted for selectively harvesting a plurality of kinds of crop and the control arrangement determines the predetermined processing time from a set of predetermined processing times based on the selected kind of crop, and preferably that an image series is recorded within an Image recording time based on the selected kind of crop.

15. An agricultural harvester according to one of claims 1 to 14 **characterised in that** the sensor device (3) records image series with a maximum cycle time, preferably with a period time, wherein the maximum cycle time or the period time Is less than the predetermined processing time.

## Revendications

1. Machine agricole de récolte comprenant un agencement de contrôle (2), lequel agencement de contrôle (2) comprend un équipement optique de capteurs (3) pour enregistrer des séries d'images d'un flux de récolte passant, un équipement d'analyse (4) pour déterminer une proportion de grains cassés et/ou une proportion de non-grains du flux de récolte sur la base d'une analyse d'images de la série d'images enregistrées, et un équipement de visualisation (5) pour afficher la proportion de grains cassés et/ou la proportion de non-grains, **caractérisée en ce que** le flux de récolte passant est un flux de récolte principal passant, et **en ce que** l'agencement de contrôle (2) enregistre cycliquement des séries d'images du flux de récolte principal passant et, dans un délai de traitement prédéterminé après l'enregistrement d'une série d'images, affiche une proportion de grains cassés instantanée et/ou une proportion de non-grains instantanée basée sur la série d'images, la proportion de grains cassés et/ou la proportion de non-grains constituant une extrapolation d'un débit du flux de récolte principal par le fait qu'une proportion surfacique mesurée de grains cassés et/ou une proportion surfacique mesurée de non-grains d'au moins une image de la série d'images est rapportée, au moyen d'un facteur de correction correspondant, à une proportion volumique de grains cassés et/ou à une proportion volumique de non-grains, et la proportion instantanée de grains cassés et/ou la proportion instantanée de non-grains est affichée sous la forme d'une proportion en pourcentage.

2. Machine agricole de récolte selon la revendication 1, **caractérisée en ce que** la machine de récolte comporte des appareils de travail commandables (8), et l'agencement de contrôle (2) comporte un équipement de commande et de régulation (9) pour le réglage paramétrique des appareils de travail (8) sur la base de la proportion instantanée de grains cassés et/ou de la proportion instantanée de non-grains.

3. Machine agricole de récolte selon la revendication 1 ou 2, **caractérisée en ce que** l'équipement d'analyse (4) détermine une proportion brute de grains cassés et/ou une proportion brute de non-grains et une proportion moyenne de grains cassés pour l'utilisateur et/ou une proportion moyenne de non-grains pour l'utilisateur, l'équipement de visualisation (5) affichant la proportion de grains cassés pour l'utilisateur et/ou la proportion de non-grains pour l'utilisateur, de préférence **en ce que** l'équipement de commande et de régulation (9) procède au réglage paramétrique des appareils de travail (8) sur la base de la proportion brute instantanée de grains cassés et/ou de la proportion brute instantanée de non-grains.

4. Machine agricole de récolte selon une des revendications 1 à 3, **caractérisée en ce que** la proportion de grains cassés et/ou la proportion de non-grains constitue une extrapolation du débit du flux de récolte principal par le fait qu'une proportion surfacique mesurée de grains cassés et/ou une proportion surfacique mesurée de non-grains d'au moins une image de la série d'images est rapportée, au moyen d'un facteur de correction correspondant dépendant du produit récolté, à une proportion volumique de grains cassés et/ou à une proportion volumique de non-grains, et **en ce que** la proportion volumique instantanée de grains cassés et/ou la proportion volumique instantanée de non-grains est affichée sous la forme d'une proportion en pourcentage.

5. Machine agricole de récolte selon une des revendications 1 à 4, **caractérisée en ce que** l'équipement de visualisation (5) affiche une image vidéo (20), de préférence une image vidéo fixe, laquelle correspond à une image de la série d'images enregistrée.

6. Machine agricole de récolte selon une des revendications 1 à 5, **caractérisée en ce que** l'équipement de visualisation (5) affiche un diagramme en entonnoir (21) et/ou un diagramme en colonne (22), le diagramme en entonnoir (21) et/ou le diagramme en colonne (22) représentant la proportion instantanée de grains cassés et/ou la proportion instantanée de non-grains, de préférence le diagramme en entonnoir (21) et/ou le diagramme en colonne (22) affichant une plage d'admissibilité (28).

7. Machine agricole de récolte selon la revendication 6, **caractérisée en ce que** l'équipement de visualisation (5) fournit un signal d'alerte lorsque la proportion instantanée de grains cassés et/ou la proportion instantanée de non-grains se trouve dans une plage d'alerte (29), de préférence même lorsque la proportion instantanée de grains cassés et/ou la proportion instantanée de non-grains se trouve à l'extérieur de la plage d'admissibilité (28).

8. Machine agricole de récolte selon une des revendications 1 à 7, **caractérisée en ce que** l'équipement de capteurs (3) comprend un détecteur de lumière (30), de préférence un capteur de lumière CMOS (30a), et un dispositif d'éclairage (31), de préférence un agencement à diodes électroluminescentes (31a), en particulier **en ce que** le capteur de lumière CMOS (30a) comprend un obturateur global pour régler une durée d'enregistrement de lumière, en particulier aussi **en ce que** les images de chaque série d'images individuelle sont enregistrées avec une durée identique d'enregistrement de lumière.

9. Machine agricole de récolte selon la revendication 8, **caractérisée en ce que** le dispositif d'éclairage (21) produit pour chaque image d'une série d'images une impulsion d'éclairage, de préférence **en ce que** les impulsions d'éclairage d'une série d'images possèdent une durée d'impulsion d'éclairage à chaque fois différente.

10. Machine agricole de récolte selon une des revendications 1 à 9, **caractérisée en ce que** l'équipement de capteurs (3) comporte une partie de carter transparente (32) qui fait partie d'une surface de paroi (33), en particulier localement plane, d'un guide de produit récolté (34), de préférence tubulaire, en particulier d'un élévateur de grains (19), en particulier aussi **en ce que** la partie de carter transparente (32) forme une portion d'une section transversale de guide de produit récolté (38), laquelle est traversée pour l'essentiel par le flux de récolte complet de la machine de récolte.

11. Machine agricole de récolte selon la revendication 10, **caractérisée en ce que** le guide de produit récolté (34) comporte un agencement d'entraînement de produit récolté (35), de préférence des aubes à produit récolté (36) qui déplacent le flux de récolte principal de façon que celui-ci soit dirigé au moins partiellement, en particulier selon un angle aigu (37) ou selon un angle obtus, vers la partie de carter transparente (32).

12. Machine agricole de récolte selon une des revendications 10 à 11, **caractérisée en ce que** le flux de récolte principal passant est pour l'essentiel toujours déplacé de façon à passer devant la partie de carter transparente (32).

13. Machine agricole de récolte selon une des revendications 1 à 12, **caractérisée en ce que** le délai de traitement prédéterminé est sensiblement égal à une seconde, de préférence inférieur à une seconde.

14. Machine agricole de récolte selon une des revendications 1 à 13, **caractérisée en ce que** la machine de récolte est agencée pour récolter au choix plusieurs types de récolte, et l'agencement de contrôle détermine le délai de traitement prédéterminé à partir d'une série de délais de traitement prédéterminés sur la base du type de récolte choisi, de préférence **en ce qu'**une série d'images est enregistrée dans les limites d'une durée d'enregistrement d'images basée sur le type de récolte choisi.

15. Machine agricole de récolte selon une des revendications 1 à 14, **caractérisée en ce que** l'équipement de capteurs (3) enregistre des séries d'images avec un temps cyclique, de préférence avec un temps périodique, le temps cyclique maximal, respectivement le temps périodique, étant inférieur au délai de traitement prédéterminé.
